# EUROPÄISCHE PATENTSCHRIFT

(11) **EP 3 098 405 B1**
(45) Veröffentlichungstag und Bekanntmachung des Hinweises auf die Patenterteilung: **18.07.2018**
(21) Anmeldenummer: 16169205.8
(22) Anmeldetag: 11.05.2016
(51) Int. Cl.: F01N 3/021, F01N 3/28

(54) **ABGASBEHANDLUNGSEINRICHTUNG MIT AUSTAUSCHBAREM EINSATZ**
EXHAUST GAS TREATMENT DEVICE WITH EXCHANGEABLE INSERT
DISPOSITIF DE TRAITEMENT DES GAZ D'ECHAPPEMENT COMPRENANT UN INSERT AMOVIBLE

(30) Priorität: 27.05.2015 DE 102015209681
(43) Veröffentlichungstag der Anmeldung: 30.11.2016
(73) Patentinhaber: Eberspächer Exhaust Technology GmbH & Co. KG, 66539 Neunkirchen (DE)
(72) Erfinder: Vyelyayev, Oleksander, 70437 Stuttgart (DE); Ehrler, Simon, 73770 Denkendorf (DE); Henzler, Markus, 72661 Grafenberg (DE)
(74) Vertreter: BRP Renaud & Partner mbB Rechtsanwälte Patentanwälte Steuerberater

(56) Entgegenhaltungen:
- WO-A1-2009/096641
- WO-A1-2014/081375
- US-A- 4 353 873
- US-A- 5 555 621
- US-A1- 2006 010 861

## Beschreibung

Die vorliegende Erfindung betrifft eine Abgasbehandlungseinrichtung für eine Abgasanlage einer Brennkraftmaschine, in deren Gehäuse ein Einsatz mit zumindest einem Abgasbehandlungselement austauschbar angeordnet ist. Die Erfindung betrifft außerdem einen Einsatz zum Einbau in eine derartige Abgasbehandlungseinrichtung.

Eine Abgasbehandlungseinrichtung, wie zum Beispiel ein Katalysator oder ein Partikelfilter, besitzt üblicherweise ein rohrförmiges Gehäuse zur Abgasführung, in dem zumindest ein Abgasbehandlungselement angeordnet ist, bei dem es sich, je nach Konstellation der Abgasbehandlungseinrichtung, z.B. um ein Katalysatorelement oder um ein Partikelfilterelement handeln kann. Es ist klar, dass in einer derartigen Abgasbehandlungseinrichtung auch mehrere gleichartige und/oder verschiedene Abgasbehandlungselemente angeordnet sein können. Denkbar ist beispielsweise die Anordnung eines Oxidationskatalysatorelements stromauf eines Partikelfilterelements oder die Anordnung eines Oxidationskatalysatorelements stromab eines SCR-Katalysatorelements, wobei SCR für selektive katalytische Reduktion steht. Ebenso ist denkbar, ein Partikelfilterelement stromauf eines SCR-Katalysatorelements anzuordnen.

Derartige Abgasbehandlungselemente sind während des Betriebs einem gewissen Verschleiß ausgesetzt, so dass es während der Lebensdauer der damit ausgestatteten Abgasanlage erforderlich sein kann, das jeweilige Abgasbehandlungselement auszubauen, zu reinigen und wieder einzubauen oder gegen ein neues auszutauschen. Damit diese Wartung einfacher realisierbar ist, kann vorgesehen sein, das jeweilige Abgasbehandlungselement in einem Einsatz anzuordnen, der seinerseits austauschbar im Gehäuse der Abgasbehandlungseinrichtung angeordnet ist. Somit kann beispielsweise die komplexe Lagerung keramischer Substrate, die bei Katalysatoren und Partikelfiltern zum Einsatz kommen können, in besagtem Einsatz erfolgen, der dann auf geeignete Weise austauschbar im Gehäuse angeordnet werden kann.

Die Dokumente WO 2009/096641 A1 und US 2006/0010861 A1 zeigen jeweils eine mögliche Anordnung eines austauschbaren Einsatzes in einem Gehäuse einer Abgabehandlungseinrichtung. Der Einsatz wird derart angeordnet, dass er an einem axialen Ende an einen Anschlag geschoben wird, und am anderen axialen Ende durch ein Riegelelement festgesetzt wird.

Hier setzt die vorliegende Erfindung an. Die Erfindung beschäftigt sich mit dem Problem, für eine derartige Abgasbehandlungseinrichtung bzw. für einen derartigen Einsatz eine verbesserte Ausführungsform anzugeben, die eine vereinfachte Montage des Einsatzes im Gehäuse der Abgasbehandlungseinrichtung ermöglicht, was im Wartungsfall den Austausch des Einsatzes bzw. die Demontage und Montage des Einsatzes vereinfacht.
Dieses Problem wird erfindungsgemäß durch die Gegenstände der unabhängigen Ansprüche gelöst. Vorteilhafte Ausführungsformen sind Gegenstand der abhängigen Ansprüche.
Die Erfindung beruht auf dem allgemeinen Gedanken, zum Festlegen des Einsatzes im Gehäuse der Abgasbehandlungseinrichtung einerseits einen Axialanschlag und andererseits eine axiale Verriegelung vorzusehen. Der Axialanschlag wirkt zwischen einen rohrförmigen Mantel des Einsatzes und dem rohrförmigen Gehäuse und limitiert das Einschieben des Einsatzes in das Gehäuse in einer Einschubrichtung. Hierdurch ist eine Axialposition des Einsatzes im Gehäuse durch den Axialanschlag definiert. Die Verriegelung fixiert diese Axialposition, indem sie den Einsatz daran hindert, sich entgegen der Einschubrichtung relativ zum Gehäuse zu bewegen. Auf diese Weise wird eine vorbestimmte Relativlage zwischen Einsatz und Gehäuse sichergestellt, was eine ordnungsgemäße Montage bzw. einen ordnungsgemäßen Einbau des Einsatzes im Gehäuse vereinfacht. Der Axialanschlag und die axiale Verriegelung sind dabei im Inneren des Gehäuses, also axial zwischen axialen Enden des Gehäuses angeordnet bzw. ausgebildet.

Der Axialanschlag ist bevorzugt mit Hilfe eines axialen Anschlags und eines dazu komplementären axialen Gegenanschlags realisiert, wobei der Anschlag an einer Mantelaußenseite des Mantels ausgebildet ist, während der Gegenanschlag an einer Gehäuseinnenseite des Gehäuses ausgebildet ist. Sobald der Anschlag beim Einschieben des Einsatzes in das Gehäuse am Gegenanschlag axial zur Anlage kommt, ist die vorbestimmte Relativlage zwischen Einsatz und Gehäuse erreicht. Der Gegenanschlag ist dabei zweckmäßig von beiden axialen Enden des Gehäuses axial beabstandet. Die Verriegelung wird zweckmäßig mit Hilfe wenigstens eines Riegelelements und einer Stützkontur realisiert, wobei das jeweilige Riegelelement an der Gehäuseinnenseite vorgesehen ist, während die Stützkontur am Mantel ausgebildet ist. Im verriegelten Zustand stützt sich das jeweilige Riegelelement in der Einschubrichtung axial an der Stützkontur ab. In der Folge ist der Einsatz an einer Axialverstellung in einer der Einschubrichtung entgegengesetzten Auszugsrichtung gehindert. Das jeweilige Riegelelement ist dabei zweckmäßig von beiden axialen Enden des Gehäuses axial beabstandet.

Damit der jeweilige Einsatz austauschbar im Gehäuse angeordnet werden kann, muss der Einsatz gezielt auf die jeweilige Abgasbehandlungseinrichtung abgestimmt sein, wobei diese Abstimmung über eine rein geometrische Anpassung hinausgeht, da insbesondere an der Mantelaußenseite des Einsatzes ein axialer Anschlag vorgesehen werden muss, der bei Erreichen der vorbestimmten Relativlage zwischen Einsatz und Gehäuse mit dem gehäuseseitigen Gegenanschlag zusammenwirkt. Des Weiteren muss die Stützkontur am Mantel des Einsatzes so ausgestaltet und angeordnet sein, dass sie mit dem jeweiligen gehäuseseitigen Riegelelement zum axialen Fixieren des Einsatzes im Gehäuse zusammenwirken kann, und zwar dann, wenn der einsatzseitige Anschlag am gehäuseseitigen Gegenanschlag axial anliegt.

Das jeweilige Riegelelement ist bezüglich des Gehäuses ein separates Bauteil, das auf geeignete Weise am Gehäuse bzw. an der Gehäuseinnenseite fixiert ist. Beispielsweise kann das jeweilige Riegelelement mit dem Gehäuse verschweißt oder verlötet sein. Das Riegelelement kann hierbei als Federlasche ausgestaltet sein, die einen fest mit dem Gehäuse verbundene Halteabschnitt und einen relativ dazu federelastisch radial verstellbaren Feder- oder Riegelabschnitt aufweist, an dem beispielsweise eine weiter unten genannte Riegelseite ausgebildet sein kann.
Bei dieser separaten Bauweise trägt das jeweilige Riegelelement an der Gehäuseinnenseite auf, so dass der Mantel des Einsatzes hinsichtlich seiner Dimensionierung so auf die Gehäuseinnenseite abgestimmt sein muss, dass sich ein Ringspalt zwischen Gehäuseinnenseite und Mantelaußenseite ausbildet. Dieser Ringspalt ist dabei so dimensioniert, dass sich darin das Riegelelement anordnen lässt, um den Einsatz für die Demontage und für die Montage am jeweiligen Riegelelement vorbeiführen zu können. Mehrere derartige Riegelelemente sind in der Umfangsrichtung, vorzugsweise gleichmäßig, verteilt angeordnet.
Das jeweilige Riegelelement kann sich in der Umfangsrichtung erstrecken, so dass der zuvor genannte Riegelabschnitt in der Umfangsrichtung vom Halteabschnitt absteht.
Gemäß einer vorteilhaften Ausführungsform kann das jeweilige Riegelelement radial federelastisch ausgestaltet sein, und zwar derart, dass es zwischen einer Verriegelungsstellung und einer Entriegelungsstellung weitgehend elastisch verstellbar ist. In der Verriegelungsstellung wirkt das jeweilige Riegelelement mit der Stützkontur zur axialen Fixierung des Einsatzes im Gehäuse zusammen. In der Entriegelungsstellung gibt das jeweilige Riegelelement dagegen die Stützkontur frei, so dass der Einsatz in einer der Einschubrichtung entgegengesetzten Auszugsrichtung aus dem Gehäuse herausziehbar ist. Es ist klar, dass dieser Einsatz oder ein anderer Einsatz in der Entriegelungsstellung des jeweiligen Riegelelements auch in der Einschubrichtung in das Gehäuse einschiebbar ist. Ein derartiges federelastisches Riegelelement lässt sich besonders preiswert realisieren und zeichnet sich durch eine hohe Zuverlässigkeit aus.

Gemäß einer anderen vorteilhaften Ausführungsform kann das jeweilige Riegelelement vorgespannt an der Stützkontur abgestützt sein, so dass der Anschlag axial vorgespannt am Gegenanschlag anliegt. Durch die Vorspannung zwischen Riegelelement und Stützkontur lässt sich jegliches Axialspiel und vorzugsweise auch jegliches Radialspiel zwischen Einsatz und Gehäuse eliminieren. Zum einen können dadurch Geräusch erzeugende Relativbewegungen zwischen Einsatz und Gehäuse vermieden werden. Zum anderen lassen sich dadurch auch Herstellungstoleranzen ausgleichen.

Gemäß einer anderen vorteilhaften Ausführungsform kann das jeweilige Riegelelement an einer mit der Stützkontur zusammenwirkenden Riegelseite rampenförmig ausgestaltet sein. Durch diese Rampenkontur ist die Riegelseite gegenüber einer Querschnittsebene, die sich senkrecht zur Längsmittelachse des Gehäuses erstreckt, geneigt, beispielsweise mit einem Winkel größer als 0° und kleiner als 45°. Durch die Rampenform der Riegelseite des jeweiligen Riegelelements wird gleichzeitig eine radiale Zentrierung des Einsatzes im Gehäuse realisiert, vorzugsweise dann, wenn mehrere derartige Riegelelemente in der Umfangsrichtung verteilt angeordnet sind.

Gemäß einer zweckmäßigen Weiterbildung kann das jeweilige Riegelelement relativ zur Gehäuseinnenseite radial federelastisch angeordnet sein und radial vorgespannt an der Stützkontur anliegen. Die rampenförmige Riegelseite erzeugt dann eine axiale Vorspannung im Mantel, die den Mantel mit seinem Anschlag gegen den Gegenanschlag andrückt. Die rampenförmige Riegelseite bewirkt somit eine Umlenkung der radialen Vorspannkraft des jeweiligen Riegelelements in eine axiale Vorspannung des Mantels.

Bei einer anderen vorteilhaften Ausführungsform kann der Anschlag an einem in der Einschubrichtung vorausgehenden axialen Endabschnitt des Mantels angeordnet sein. Hierdurch lässt sich der Anschlag besonders einfach realisieren.

Zweckmäßig kann der Anschlag durch eine in der Umfangsrichtung ringförmig umlaufende Mantelstufe gebildet sein, die einen das jeweilige Abgasbehandlungselement enthaltenden Elementaufnahmeabschnitt mit einem Mantelkragen verbindet, dessen Außenquerschnitt kleiner ist als der Außenquerschnitt des Elementaufnahmeabschnitts. Mit anderen Worten, die Mantelstufe erzeugt den im Vergleich zum Elementaufnahmeabschnitt eingeschnürten Mantelkragen. Eine derartige Mantelstufe lässt sich besonders preiswert herstellen. Gleichzeitig ist der Anschlag dadurch entlang des gesamten Umfangs angeordnet und ermöglicht dadurch eine in der Umfangsrichtung gleichmäßige Abstützung zwischen Einsatz und Gehäuse.

Bei einer anderen Ausführungsform, die vorzugsweise gemeinsam mit der vorstehend genannten Ausführungsform realisierbar ist, kann der Gegenanschlag durch eine in der Umfangsrichtung ringförmig umlaufende Gehäusestufe gebildet sein, die einen den Einsatz enthaltenden Einsatzaufnahmeabschnitt mit einem Gehäusekragen verbindet, dessen Innenquerschnitt kleiner ist als der Innenquerschnitt des Einsatzaufnahmeabschnitts. Mit anderen Worten, die Gehäusestufe erzeugt einen im Vergleich zum Einsatzaufnahmeabschnitt eingeschnürten Gehäusekragen. Auch hier lässt sich diese Gehäusestufe vergleichsweise einfach realisieren. Außerdem ist diese Gehäusestufe in der Umfangsrichtung umlaufend, so dass eine in der Umfangsrichtung gleichförmige Abstützung zwischen Gehäuse und Einsatz realisierbar ist. Außen auf dem Gehäusekragen kann beispielsweise ein Einlasstrichter des Gehäuses aufgesetzt und damit fest verbunden sein, beispielsweise durch eine Schweißverbindung oder durch eine Lötverbindung.

Besonders vorteilhaft ist nun eine Weiterbildung, bei der sowohl die vorstehend genannte Mantelstufe als auch die vorstehend genannte Gehäusestufe realisiert sind. Im Einbauzustand liegt dann die Mantelstufe axial an der Gehäusestufe an. Mantelstufe und Gehäusestufe sind dabei so aufeinander abgestimmt, dass sich im Profil, das senkrecht zur Umfangsrichtung verläuft, ein quasi punktförmiger Kontakt zwischen der Mantelaußenseite und der Gehäuseinnenseite ergibt, der jedoch in der Umfangsrichtung linienförmig geschlossen umläuft.

Insbesondere können Mantelstufe und Gehäusestufe so aufeinander abgestimmt sein, dass der Innenquerschnitt des Gehäusekragens größer ist als der Außenquerschnitt des Mantelkragens und kleiner ist als der Außenquerschnitt des Elementaufnahmeabschnitts. Der Innenquerschnitt des Einsatzaufnahmeabschnitts ist dabei größer als der Außenquerschnitt des Elementaufnahmeabschnitts. Auf diese Weise wird erreicht, dass sowohl einerseits zwischen dem Außenquerschnitt des Mantelkragens und dem Innenquerschnitt des Gehäusekragens als auch andererseits zwischen dem Außenquerschnitt des Elementaufnahmeabschnitts und dem Innenquerschnitt des Einsatzaufnahmeabschnitts jeweils ein radialer Ringraum ausgebildet ist, wobei der Kontakt zwischen Mantelstufe und Gehäusestufe in einem konischen Bereich der Mantelstufe und der Gehäusestufe erfolgt. Hierdurch wird gleichzeitig im Bereich des Anschlags eine radiale Zentrierung des Einsatzes im Gehäuse erreicht. Das Zusammenwirken von Mantelstufe und Gehäusestufe ist dabei ähnlich dem Zusammenwirken zwischen einem Ventilteller und einem Ventilsitz, wobei der Ventilteller durch die Mantelstufe gebildet ist, während der Ventilsitz durch die Gehäusestufe gebildet ist. Dementsprechend bewirkt der hier vorgestellte Axialanschlag eine gewisse Dichtung zwischen Mantel und Gehäuse, wodurch die Gefahr einer den Einsatz umgehenden Leckageströmung reduziert ist.

Bei einer anderen vorteilhaften Ausführungsform kann radial zwischen der Gehäuseinnenseite und der Mantelaußenseite ein Ringspalt ausgebildet sein, in dem zumindest eine Spaltdichtung angeordnet ist, die bezüglich des Mantels, insbesondere auch bezüglich des Gehäuses, ein separates Bauteil repräsentiert. Mit Hilfe einer derartigen Spaltdichtung kann die Gefahr einer Leckageströmung reduziert werden, die den Einsatz innerhalb des Gehäuses umgeht. Die Spaltdichtung ist dabei lose an der Mantelaußenseite angeordnet. Zweckmäßig ist sie auch an der Gehäuseinnenseite lose angeordnet.

Gemäß einer anderen Ausführungsform kann die Stützkontur durch eine axiale Stirnseite des Mantels gebildet sein, die entgegen der Einschubrichtung, also in der Auszugsrichtung, vom Anschlag abgewandt ist. Wenn beim Einschieben des Einsatzes ein vorausgehendes Ende des Einsatzes ein vorderes Ende des Einsatzes definiert, ist die Stützkontur an einem hinteren Ende des Einsatzes angeordnet. Durch die Nutzung der axialen Stirnseite des Mantels vereinfacht sich die Realisierung des Einsatzes. Insbesondere kommt es bei einem optional kreiszylindrischen Gehäuse und einem optional kreiszylindrischen Mantel nicht exakt auf die Drehlage zwischen Einsatz und Gehäuse an, um ein ordnungsgemäßes Zusammenwirken zwischen dem jeweiligen Riegelelement und der Stützkontur zu erreichen.

Bei einer anderen Ausführungsform kann am Mantel wenigstens eine Stützlasche vorgesehen sein, die den Mantel an der Gehäuseinnenseite radial abstützt. Durch eine derartige Stützlasche wird eine radiale Positionierung zwischen Einsatz und Gehäuse vereinfacht. Zweckmäßig sind mehrere derartige Stützlaschen in der Umfangsrichtung verteilt angeordnet, um eine radiale Zentrierung des Einsatzes im Gehäuse zu bewirken. Zweckmäßig sind die Stützlaschen an der axialen Stirnseite des Mantels ausgebildet, vorzugsweise integral daran ausgeformt.

Bei einer anderen Ausführungsform kann am Mantel wenigstens eine Auszugskontur vorgesehen sein, an der ein Auszugswerkzeug formschlüssig eingreifen kann, um den Einsatz aus dem Gehäuse herauszuziehen. Eine derartige Auszugskontur kann beispielsweise durch eine am Mantel ausgebildete Hinterschnittkante realisiert sein, die sich vom Auszugswerkzeug formschlüssig hintergreifen lässt. Besonders einfach ist eine Ausführungsform, bei der eine derartige Auszugskontur durch eine radiale Öffnung im Mantel realisiert ist, in die das Auszugswerkzeug von radial außen oder von radial innen einführbar ist, so dass ein formschlüssiger Eingriff mit einem Öffnungsrand dieser Öffnung möglich ist. Besonders zweckmäßig kann eine derartige Auszugskontur an einer Auszugslasche vorgesehen sein, die am Mantel angeordnet ist. Beispielsweise lässt sich eine derartige Auszugslasche an der axialen Stirnseite des Mantels ausbilden, an der auch die Stützkontur vorgesehen ist. Bevorzugt sind mehrere derartige Auszugskonturen bzw. mehrere derartige Auszugslaschen vorgesehen, die in der Umfangsrichtung verteilt angeordnet sind. Die jeweilige Auszugslasche enthält zweckmäßig eine radiale Öffnung, deren Öffnungsrand die Auszugskontur bildet.

Bei einer anderen vorteilhaften Ausführungsform kann das Gehäuse in einem entgegen der Einschubrichtung vom jeweiligen Riegelelement beabstandeten Bereich geöffnet und wieder geschlossen werden, so dass bei geöffnetem Gehäuse der jeweilige Einsatz aus dem Gehäuse herausziehbar ist und darin einschiebbar ist. Beispielsweise kann das Gehäuse an seiner Austrittsseite einen Auslasstrichter aufweisen, der mit geeigneten Schnellbefestigungsmitteln einfach am übrigen Gehäuse festlegbar und davon entfernbar ist. Ebenso ist denkbar, das Gehäuse in der Axialrichtung zu teilen und die beiden Gehäuseteile lösbar aneinander zu fixieren, so dass bei geöffnetem Gehäuse die Innenseiten der beiden Gehäuseteile zugänglich sind. Grundsätzlich kann dann in jedem dieser Gehäuseteile jeweils zumindest ein derartiger Einsatz angeordnet sein, und zwar auf die vorstehend beschriebene Art und Weise mit Axialanschlag und Verriegelung. Ebenso ist denkbar, im Gehäuse mehrere derartige Einsätze mit separaten Axialanschlägen und separaten Verriegelungen axial hintereinander anzuordnen.

Ein erfindungsgemäßer Einsatz, der für einen Einbau in eine Abgasbehandlungseinrichtung der vorstehend beschriebenen Art vorgesehen und bestimmt ist, kennzeichnet sich durch einen rohrförmigen Mantel, in dem zumindest ein Abgasbehandlungselement fixiert ist. Der Mantel ist dabei so dimensioniert, dass der gesamte Einsatz in einer Einschubrichtung axial in das Gehäuse einschiebbar ist. Ferner weist der Mantel einen axialen Anschlag, der im eingebauten Zustand am Gegenanschlag des Gehäuses axial anliegt, sowie eine Stützkontur auf, an der im eingebauten Zustand das jeweilige Riegelelement axial abgestützt ist. Damit das jeweilige Riegelelement sich genau dann axial an der Stützkontur des Mantels abstützen kann, wenn der Anschlag des Mantels am Gegenanschlag des Gehäuses anliegt, müssen Einsatz und Abgasbehandlungseinrichtung exakt aufeinander abgestimmt sein. Insbesondere müssen auf der Seite des Einsatzes die Anordnung und Ausgestaltung des Anschlags und der Stützkontur exakt auf die gehäuseseitige Anordnung und Ausgestaltung des Gegenanschlags und des jeweiligen Riegelelements abgestimmt sein, damit der Einsatz in der vorgesehenen Weise mit in der Abgasbehandlungseinrichtung verwendet werden kann.

Das jeweilige Abgasbehandlungselement kann im Mantel beispielsweise mittels einer Lagermatte axial fixiert sein, wozu die Lagermatte radial zwischen dem Abgasbehandlungselement und dem Mantel verpresst ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: ein vereinfachter Längsschnitt einer Abgasbehandlungseinrichtung entsprechend Schnittlinien I in Fig. 2,
- Fig. 2: ein Querschnitt der Abgasbehandlungseinrichtung gemäß Schnittlinien II in Fig. 1,
- Fig. 3: ein vergrößertes Detail III aus Fig. 1,
- Fig. 4: ein vergrößertes Detail IV aus Fig. 1,
- Fig. 5: ein vergrößertes Detail V aus Fig. 2,
- Fig. 6: eine isometrische auseinandergezogene Darstellung der Abgasbehandlungseinrichtung während einer Demontage oder während einer Montage.

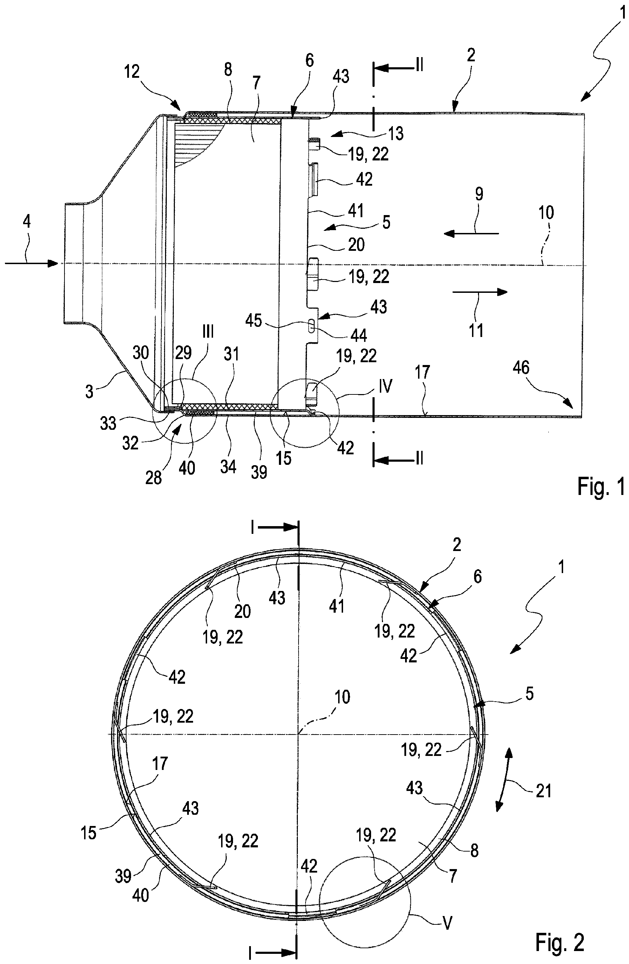

Entsprechend Fig. 1 umfasst eine Abgasbehandlungseinrichtung 1 ein rohrförmiges Gehäuse 2, das im Beispiel außerdem mit einem Einlasstrichter 3 ausgestattet ist. Eine im Betrieb vorgesehene Abgasströmungsrichtung ist in Fig. 1 durch einen Pfeil angedeutet und mit 4 bezeichnet. Ein Auslassende des Gehäuses 2 ist hier nicht dargestellt. Die Abgasbehandlungseinrichtung 1 kann beispielsweise ein Partikelfilter oder ein Katalysator oder eine beliebige Kombination aus mehreren verschiedenen Katalysatoren bzw. aus wenigstens einem Katalysator und einem Partikelfilter sein. Die Abgasbehandlungseinrichtung 1 ist für eine Verwendung in einer Abgasanlage einer Brennkraftmaschine vorgesehen, die beispielsweise in einem Kraftfahrzeug angeordnet ist.

Im Gehäuse 2 ist zumindest ein Einsatz 5 austauschbar angeordnet. Der Einsatz 5 weist einen rohrförmigen Mantel 6 auf sowie wenigstens ein Abgasbehandlungselement 7, das im Mantel 6 fixiert ist. Beispielsweise kann das Abgasbehandlungselement 7 im Mantel 6 mit Hilfe einer Lagermatte 8 fixiert sein. Hierzu wird die Lagermatte 8 radial zwischen Abgasbehandlungselement 7 und Mantel 6 radial verpresst, wodurch eine axiale Fixierung des Abgasbehandlungselements 7 relativ zum Mantel 6 bewirkt wird. Der Mantel 6 mit darin fixiertem Abgasbehandlungselement 7 kann auch als "Canning" bezeichnet werden.

Der Einsatz 5 ist so auf das Gehäuse 2 abgestimmt, dass er in einer durch einen Pfeil angedeuteten Einschubrichtung 9 in das Gehäuse 2 einschiebbar ist. Die Einschubrichtung 9 verläuft dabei parallel zu einer Längsmittelachse 10 des Gehäuses 2. Des Weiteren ist der Einsatz 5 in einer ebenfalls durch einen Pfeil angedeuteten Auszugsrichtung 11 aus dem Gehäuse 2 herausziehbar. Die Auszugsrichtung 11 verläuft ebenfalls parallel zur Längsmittelachse 10.

Der Einsatz 5 ist im Gehäuse 2 einerseits mit Hilfe eines Axialanschlags 12 und andererseits mit Hilfe einer Verriegelung 13 axial fixiert. Bei der hier vorgestellten, bevorzugten Ausführungsform bewirken der Axialanschlag 12 und die Verriegelung 13 außerdem eine radiale Zentrierung des Einsatzes 5 im Gehäuse 2.

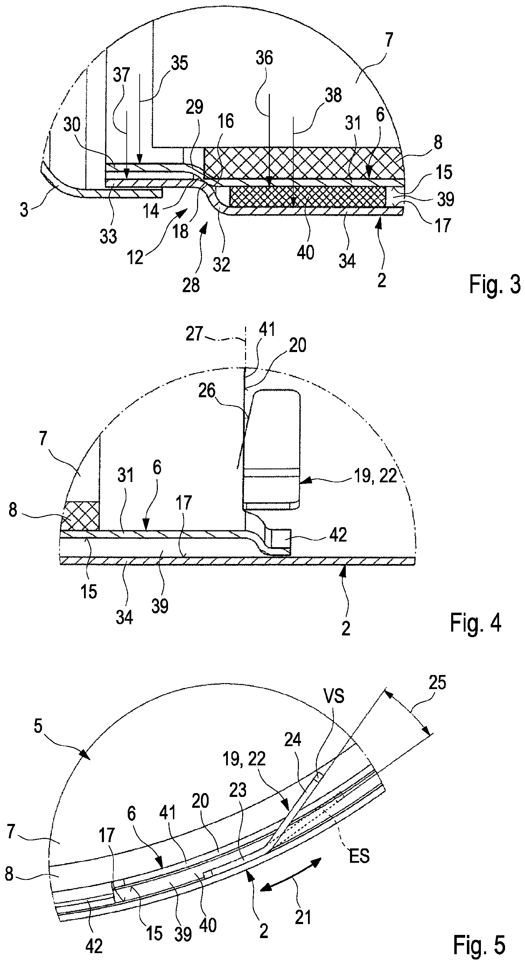

Der Axialanschlag 12 besitzt gemäß Fig. 3 einen axialen Anschlag 14, der an einer Mantelaußenseite 15 des Mantels 6 ausgebildet ist. Der Axialanschlag 12 weist außerdem einen axialen Gegenanschlag 16 auf, der an einer Gehäuseinnenseite 17 des Gehäuses 2 ausgebildet ist. Im eingeschobenen bzw. eingebauten Zustand liegt der Anschlag 14 axial am Gegenanschlag 16 an, und zwar in der Einschubrichtung 9. Eine entsprechende Kontaktstelle ist in Fig. 3 mit 18 bezeichnet.

Die Verriegelung 13 umfasst gemäß den Fig. 1, 2, 4 und 5 zumindest ein Riegelelement 19, das sich an einer mantelseitigen Stützkontur 20 in der Einschubrichtung 9 axial abstützt. Die Stützkontur 20 ist am Mantel 6 ausgebildet. Zweckmäßig sind mehrere derartige Riegelelemente 19 vorgesehen, die in der Umfangsrichtung 21 des Gehäuses 2 gleichmäßig verteilt angeordnet sind. Die Umfangsrichtung 21 bezieht sich dabei auf die Längsmittelachse 10. Im Beispiel der Fig. 2 sind genau sechs derartige Riegelelemente 19 vorgesehen. Es können jedoch auch mehr oder weniger als sechs Riegelelemente 19 sein.

Axialanschlag 12 und Verriegelung 13 sind im Inneren des Gehäuses 2 ausgebildet, so dass sie vor einem Zugriff von außen geschützt sind. Der Gegenanschlag 16 ist am Gehäuse 2 axial zwischen zwei axialen Enden des Gehäuses 2 angeordnet und dazu jeweils axial beabstandet. Ebenso ist das jeweilige Riegelelement 19 am Gehäuse 2 axial zwischen den beiden axialen Enden des Gehäuses 2 angeordnet und dazu jeweils axial beabstandet.

Das jeweilige Riegelelement 19 ist gemäß Fig. 5 radial federelastisch ausgestaltet, so dass es zwischen einer in Fig. 5 mit durchgezogener Linie dargestellten Verriegelungsstellung VS und einer mit unterbrochener Linie angedeuteten Entriegelungsstellung ES weitgehend elastisch verstellbar ist. In der Verriegelungsstellung VS wirkt das jeweilige Riegelelement 19 mit der Stützkontur 20 zur axialen Fixierung des Einsatzes 5 im Gehäuse 2 zusammen. In der Entriegelungsstellung ES gibt das jeweilige Riegelelement 19 dagegen die Stützkontur 20 frei, so dass in der Folge der Einsatz 5 in der Auszugsrichtung 11 aus dem Gehäuse 2 herausziehbar ist.

Beim hier gezeigten Beispiel ist das jeweilige Riegelelement 19 durch eine Federlasche 22 gebildet, die einen Halteabschnitt 23 und einen Riegelabschnitt 24 aufweist und die bezüglich des Gehäuses 2 ein separates Bauteil repräsentiert. Mit dem Halteabschnitt 23 ist die Federlasche 22 an der Gehäuseinnenseite 17 fixiert, beispielsweise mittels einer Lötverbindung oder mittels einer Schweißverbindung. Grundsätzlich kann der Halteabschnitt 23 auch mit dem Gehäuse 2 vernietet sein. Der Riegelabschnitt 24 ist relativ zum Halteabschnitt 23 radial federelastisch beweglich, um die beiden vorgenannten Stellungen, nämlich die Verriegelungsstellung VS und die Entriegelungsstellung ES für das Riegelelement 19 zu ermöglichen.

Das Riegelelement 19 ist im Allgemeinen am Gehäuse 2 so angeordnet, dass es bezüglich einer parallel zur Längsmittelachse 10 verlaufenden Biegeachse federelastisch zwischen der Verriegelungsstellung VS und der Entriegelungsstellung ES verstellbar ist. Hierzu erstreckt sich das jeweilige Riegelelement 19 in der Umfangsrichtung 21. Für die Federlasche 22 bedeutet dies, dass der Riegelabschnitt 24 in der Umfangsrichtung 21 vom Halteabschnitt 23 absteht und zumindest in der Verriegelungsstellung VS einen Winkel gegenüber der Umfangsrichtung 21 bzw. gegenüber einer am Gehäuse 2 anliegenden Tangente einschließt. Im Beispiel der Fig. 5 liegt auch in der Entriegelungsstellung ES ein derartiger Winkel zwischen dem Riegelabschnitt 24 und der Umfangsrichtung 21 bzw. einer am Gehäuse 2 anliegenden Tangente vor. Dementsprechend ergibt sich ein in Fig. 5 wiedergegebener Differenzwinkel 25, den der Riegelabschnitt 24 in der Verriegelungsstellung VS im Vergleich zur Entriegelungsstellung ES erzeugt.

Besonders zweckmäßig ist hier eine Ausführungsform, bei der das jeweilige Riegelelement 19 vorgespannt an der Stützkontur 20 abgestützt ist, so dass letztlich über den Mantel 6 der Anschlag 14 axial vorgespannt am Gegenanschlag 16 anliegt. Erreicht wird dies im gezeigten Beispiel mit Hilfe einer rampenförmigen Riegelseite 26, über die sich das jeweilige Riegelelement 19 gemäß Fig. 4 an der Stützkontur 20 abstützt. Die rampenförmige Riegelseite 26 ist dabei gegenüber einer Querschnittsebene 27 geneigt, die sich senkrecht zur Längsmittelachse 10 erstreckt und in der im Beispiel der Fig. 4 die Stützkontur 20 liegt. Beispielsweise ist der Neigungswinkel zwischen der Riegelseite 26 und der Querschnittsebene 27 kleiner als 45°.

Durch die Orientierung des Riegelelements 19 in der Umfangsrichtung 21 erzeugt die rampenförmige Riegelseite 26 in Verbindung mit der radialen Federelastizität einerseits an der Stützkontur 20 eine radiale, nach innen orientierte Vorspannung. Diese radiale Vorspannung bewirkt einerseits eine Zentrierung des Einsatzes 5 im Gehäuse 2. Andererseits wird diese radiale Vorspannung über die rampenförmige Riegelseite 26 in eine axiale Vorspannung des Mantels 6 in der Einschubrichtung 9 umgewandelt, so dass sich letztlich der Mantel 6 über den Anschlag 14 axial vorgespannt am Gegenanschlag 16 des Gehäuses 2 abstützt.

Wie sich insbesondere Fig. 1 entnehmen lässt, ist der mantelseitige Anschlag 14 an einem in der Einschubrichtung 9 vorausgehenden axialen Endabschnitt 28 des Mantels 6 angeordnet. Hierdurch lässt sich der Anschlag 14 besonders einfach durch eine in der Umfangsrichtung 21 ringförmig umlaufende Mantelstufe 29 realisieren. Diese Mantelstufe 29 verbindet dabei eine Mantelkragen 30 mit einem Elementaufnahmeabschnitt 31, der das wenigstens eine Abgasbehandlungselement 7 enthält. Analog dazu ist im Beispiel der gehäuseseitige Gegenanschlag 16 durch eine in der Umfangsrichtung 21 ringförmig umlaufende Gehäusestufe 32 gebildet, die einen Gehäusekragen 33 mit einem Einsatzaufnahmeabschnitt 34 verbindet, in dem der Einsatz 5 angeordnet ist. Gemäß Fig. 3 ist ein Außenquerschnitt 35 des Mantelkragens 30 kleiner als ein Außenquerschnitt 36 des Elementaufnahmeabschnitts 31. Ferner ist ein Innenquerschnitt 37 des Gehäusekragens 33 kleiner als ein Innenquerschnitt 38 des Einsatzaufnahmeabschnitts 34. Ferner ist hier vorgesehen, dass die Mantelstufe 29 und die Gehäusestufe 32 so aufeinander abgestimmt sind, dass sich der Mantel 6 über die Mantelstufe 29 an der Gehäusestufe 32 abstützt, wobei sich zweckmäßig im Profil, also quer zur Umfangsrichtung 21 der punktförmige Kontakt 18 einstellt, der in der Umfangsrichtung 21 linienförmig geschlossen umläuft. Die Gehäusestufe 32 repräsentiert dabei eine Art Sitz für die Mantelstufe 29, wodurch es zu einem in der Umfangsrichtung 21 geschlossenen Kontakt zwischen Mantel 6 und Gehäuse 2 kommt. Der Innenquerschnitt 37 des Gehäusekragens 33 ist größer als der Außenquerschnitt 35 des Mantelkragens 30 und kleiner als der Außenquerschnitt 36 des Elementaufnahmeabschnitts 31. Ferner ist der Innenquerschnitt 38 des Einsatzaufnahmeabschnitts 34 größer als der Außenquerschnitt 36 des Elementaufnahmeabschnitts 31.

Der Einlasstrichter 3 des Gehäuses 2 ist hier außen auf den Gehäusekragen 33 aufgesetzt und damit fest verbunden, beispielsweise durch eine Schweißverbindung oder durch eine Lötverbindung.

Wie sich den Fig. 1 und 3 entnehmen lässt, ist radial zwischen der Gehäuseinnenseite 17 und der Mantelaußenseite 15 ein Ringspalt 39 ausgebildet, in dem zumindest eine Spaltdichtung 40 angeordnet ist. Die Spaltdichtung 40 ist beispielsweise als temperaturbeständige Weichstoffdichtung, zum Beispiel aus oder mit Graphit, ausgebildet. Sie ist in der Umfangsrichtung 21 geschlossen ringförmig konfiguriert. Die Spaltdichtung 40 ist bezüglich des Mantels 6 ein separates Bauteil und daran nur lose angeordnet, also nicht daran fixiert.

Gemäß den Fig. 1, 2 und 4 sowie 5 ist die Stützkontur 20 an einer axialen Stirnseite 41 des Mantels 6 gebildet, die in der Auszugsrichtung 11 vom Anschlag 14 abgewandt ist. Hierdurch lässt sich die Stützkontur 20 besonders einfach realisieren. An der Stirnseite 41 des Mantels 6 sind im gezeigten Beispiel mehrere Stützlaschen 42 ausgebildet und dabei vorzugsweise integral am Mantel 6 ausgeformt. Gezeigt sind gemäß Fig. 2 exemplarisch drei derartige Stützlaschen 42, die in der Umfangsrichtung 21 gleichförmig verteilt angeordnet sind. Die Stützlaschen 42 stehen dabei axial von der Stirnseite 41 ab und sind außerdem radial an der Gehäuseinnenseite 17 abgestützt. Hierdurch bewirken die Stützlaschen 42 ebenfalls eine Zentrierung des Mantels 6 im Gehäuse 2.

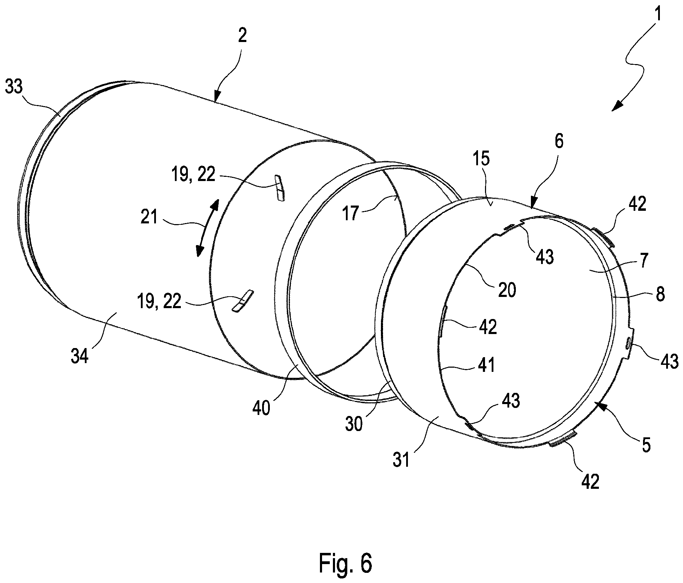

Im gezeigten Beispiel sind am Mantel 6 außerdem mehrere Auszugslaschen 43 ausgebildet, die jeweils eine radiale Öffnung 44 enthalten, wobei ein Öffnungsrand eine Auszugskontur 45 definiert, an der ein hier nicht gezeigtes Auszugswerkzeug formschlüssig eingreifen kann, um den Einsatz 5 aus dem Gehäuse 2 herauszuziehen. Gemäß Fig. 6 sind im Beispiel drei derartige Auszugslaschen 43 vorgesehen, die in der Umfangsrichtung 21 gleichförmig verteilt angeordnet sind.

Auch die Auszugslaschen 43 sind im Beispiel an der Stirnseite 41 des Mantels 6 angeordnet, so dass sie davon axial abstehen.

Das Gehäuse 2 ist gemäß Fig. 1 in einem Bereich 46 so ausgestaltet, dass es geöffnet und wieder verschlossen werden kann. Dieser Bereich 46 ist in der Auszugsrichtung 11 vom jeweiligen Riegelelement 19 axial beabstandet. Bei geöffnetem Gehäuse 2 kann der jeweilige Einsatz 5 aus dem Gehäuse 2 herausgezogen werden bzw. darin eingeschoben werden. Hierzu sind die Riegelelemente 19 beispielsweise mit Hilfe eines entsprechenden Werkzeugs von ihrer Verriegelungsstellung VS in ihre Entriegelungsstellung ES zu überführen. In Fig. 1 ist der Bereich 46 geöffnet. Ein Verschluss des Gehäuses 2 ist hier nicht dargestellt und kann beispielsweise durch einen Austrittstrichter gebildet sein, der mit Hilfe entsprechender Befestigungsmittel lösbar am Gehäuse 2 befestigt sein kann. Derartige Befestigungsmittel sind beispielsweise eine Rohrschelle.

Nach dem Öffnen des Gehäuses 2 und nach dem Überführen der Riegelelemente 19 in deren Entriegelungsstellung ES kann der Einsatz 5 mit Hilfe eines Auszugswerkzeugs in der Auszugsrichtung 11 aus dem Gehäuse 2 herausgezogen werden. Ebenso kann dann die Spaltdichtung 40 entnommen werden. Anschließend kann gemäß Fig. 6 zunächst eine neue Spaltdichtung 40 eingelegt werden. Anschließend kann ein gewarteter oder ein neuer Einsatz 5 eingeschoben werden, wobei auch hier zweckmäßig die Riegelelemente 19 mittels eines entsprechenden Werkzeugs in der Entriegelungsstellung ES gehalten sind. Sobald der Einsatz 5 seine vorbestimmte Position im Gehäuse 2 erreicht, kommt sein Anschlag 14 am Gegenanschlag 16 des Gehäuses 2 zur Anlage. Durch Entfernen des zuvor genannten Werkzeugs können die Riegelelemente 19 von der Entriegelungsstellung ES in die Verriegelungsstellung VS überführt werden. Dabei federn die Riegelelemente 19 radial nach innen, wobei sie über die rampenförmige Riegelkontur 26 die Stützkontur 20 axial in der Einschubrichtung 9 antreiben.

Gleichzeitig werden dadurch eine Zentrierung des Einsatzes 5 im Gehäuse 2 und eine axiale Vorspannung zwischen Anschlag 14 und Gegenanschlag 16 erreicht. Anschließend kann das Gehäuse 2 wieder verschlossen werden.

Die in vorliegendem Zusammenhang genannte Radialrichtung bezieht sich dabei auf die Längsmittelachse 10 des Gehäuses 2.

Obwohl in Fig. 2 der Querschnitt des Gehäuses 2 und der Querschnitt des Mantels 6 kreiszylindrisch dargestellt sind, können grundsätzlich beliebige andere, vorzugsweise runde Querschnitte für das Gehäuse 2 und den Mantel 6 vorgesehen sein, beispielsweise elliptische und ovale Querschnitte. Theoretisch sind auch unrunde, eckige Querschnitte denkbar.

## Patentansprüche

1. Abgasbehandlungseinrichtung für eine Abgasanlage einer Brennkraftmaschine,
- mit einem rohrförmigen Gehäuse (2),
- mit einem austauschbar im Gehäuse (2) angeordneten Einsatz (5), der einen rohrförmigen Mantel (6) und wenigstens ein im Mantel (6) fixiertes Abgasbehandlungselement (7) aufweist,
- wobei der Einsatz (5) in einer Einschubrichtung (9), die parallel zu einer Längsmittelachse (10) des Gehäuses (2) verläuft, in das Gehäuse (2) einschiebbar ist,
- wobei der Mantel (6) an einer Mantelaußenseite (15) einen axialen Anschlag (14) aufweist, der an einem axialen Gegenanschlag (16) in der Einschubrichtung (9) axial anliegt, der am Gehäuse (2) an einer Gehäuseinnenseite (17) ausgebildet ist,
- wobei an der Gehäuseinnenseite (17) zumindest ein Riegelelement (19) vorgesehen ist, das sich an einer am Mantel (6) ausgebildeten Stützkontur (20) in der Einschubrichtung (9) axial abstützt,
- wobei das jeweilige Riegelelement (19) ein bezüglich des Gehäuses (2) separates Bauteil ist,
**dadurch gekennzeichnet,**
- **dass** mehrere Riegelelemente (19) vorgesehen sind, die in der Umfangsrichtung (21) verteilt angeordnet sind, und
- **dass** das jeweilige Riegelelement (19) am Gehäuse (2) fixiert ist.

2. Einrichtung nach Anspruch 1,
**dadurch gekennzeichnet,**
**dass** der Gegenanschlag (16) im Inneren des Gehäuses (2) axial beabstandet von axialen Enden des Gehäuses (2) angeordnet ist.

3. Einrichtung nach Anspruch 2,
**dadurch gekennzeichnet,**
**dass** das Riegelelement (19) im Inneren des Gehäuses (2) axial beabstandet von axialen Enden des Gehäuses (2) angeordnet ist.

4. Einrichtung nach einem der Ansprüche 1 bis 3,
**dadurch gekennzeichnet,**
**dass** das jeweilige Riegelelement (19) radial federelastisch ausgestaltet ist, so dass es zwischen einer Verriegelungsstellung (VS), in der es mit der Stützkontur (20) zur axialen Fixierung des Einsatzes (5) im Gehäuse (2) zusammenwirkt, und einer Entriegelungsstellung (ES) elastisch verstellbar ist, in der es die Stützkontur (20) freigibt, so dass der Einsatz (5) in einer der Einschubrichtung (9) entgegengesetzten Auszugsrichtung (11) aus dem Gehäuse (2) herausziehbar ist.

5. Einrichtung nach einem der Ansprüche 1 bis 4,
**dadurch gekennzeichnet,**
**dass** das jeweilige Riegelelement (19) vorgespannt an der Stützkontur (20) abgestützt ist, so dass der Anschlag (14) axial vorgespannt am Gegenanschlag (16) anliegt.

6. Einrichtung nach einem der Ansprüche 1 bis 5,
**dadurch gekennzeichnet,**
**dass** das jeweilige Riegelelement (19) an einer mit der Stützkontur (20) zusammenwirkenden Riegelseite (26) rampenförmig ausgestaltet ist.

7. Einrichtung nach Anspruch 6,
**dadurch gekennzeichnet,**
**dass** das jeweilige Riegelelement (19) relativ zur Gehäuseinnenseite (17) radial federelastisch angeordnet ist, und radial vorgespannt an der Stützkontur (20) anliegt, so dass die rampenförmige Riegelseite (26) eine axiale Vorspannung in den Mantel (6) einleitet.

8. Einrichtung nach einem der Ansprüche 1 bis 7,
**dadurch gekennzeichnet,**
**dass** der Anschlag (14) an einem in der Einschubrichtung (9) vorausgehenden axialen Endabschnitt (28) des Mantels (6) angeordnet ist.

9. Einrichtung nach einem der Ansprüche 1 bis 8,
**dadurch gekennzeichnet,**
**dass** der Anschlag (14) durch eine in der Umfangsrichtung (21) ringförmig umlaufende Mantelstufe (29) gebildet ist, die einen das wenigstens eine Abgasbehandlungselement (7) enthaltenden Elementaufnahmeabschnitt (31) mit einem Mantelkragen (30) verbindet, dessen Außenquerschnitt (35) kleiner ist als der Außenquerschnitt (36) des Elementaufnahmeabschnitts (31).

10. Einrichtung nach einem der Ansprüche 1 bis 9,
**dadurch gekennzeichnet,**
**dass** der Gegenanschlag (16) durch eine in der Umfangsrichtung (21) ringförmig umlaufende Gehäusestufe (32) gebildet ist, die einen den Einsatz (5) enthaltenden Einsatzaufnahmeabschnitt (34) mit einem Gehäusekragen (33) verbindet, dessen Innenquerschnitt (37) kleiner ist als der Innenquerschnitt (38) des Einsatzaufnahmeabschnitts (34).

11. Einrichtung nach den Ansprüchen 9 und 10,
**dadurch gekennzeichnet,**
- **dass** der Innenquerschnitt (37) des Gehäusekragens (33) größer ist als der Außenquerschnitt (35) des Mantelkragens (30) und kleiner ist als der Außenquerschnitt (36) des Elementaufnahmeabschnitts (31),
- **dass** der Innenquerschnitt (38) des Einsatzaufnahmeabschnitts (34) größer ist als der Außenquerschnitt (36) des Elementaufnahmeabschnitts (31).

12. Einrichtung nach einem der Ansprüche 1 bis 11,
**dadurch gekennzeichnet,**
**dass** radial zwischen der Gehäuseinnenseite (17) und der Mantelaußenseite (15) ein Ringspalt (39) ausgebildet ist, in dem wenigstens eine Spaltdichtung (40) angeordnet ist.

13. Einrichtung nach einem der Ansprüche 1 bis 12,
**dadurch gekennzeichnet,**
**dass** die Stützkontur (20) an einer axialen Stirnseite (41) des Mantels (6) ausgebildet ist, die entgegen der Einschubrichtung (9) vom Anschlag (14) abgewandt ist.

14. Einrichtung nach einem der Ansprüche 1 bis 13,
**dadurch gekennzeichnet,**
**dass** am Mantel (6) wenigstens eine Stützlasche (42) vorgesehen ist, die den Mantel (6) an der Gehäuseinnenseite (17) radial abstützt.

15. Einrichtung nach einem der Ansprüche 1 bis 14,
**dadurch gekennzeichnet,**
**dass** am Mantel (6) wenigstens eine Auszugskontur (45) vorgesehen ist, an der ein Auszugswerkzeug formschlüssig eingreifen kann, um den Einsatz (5) aus dem Gehäuse (2) herauszuziehen.

16. Einrichtung nach einem der Ansprüche 1 bis 15,
**dadurch gekennzeichnet,**
**dass** das Gehäuse (2) in einem entgegen der Einschubrichtung (9) vom jeweiligen Riegelelement (19) beabstandeten Bereich (46) geöffnet und wieder geschlossen werden kann, so dass bei geöffnetem Gehäuse (2) der jeweilige Einsatz (5) aus dem Gehäuse (2) herausziehbar ist und darin einschiebbar ist.

17. Einsatz zum Einbau in eine Abgasbehandlungseinrichtung (1) nach einem der Ansprüche 1 bis 16,
**gekennzeichnet durch** einen Mantel (6), in dem wenigstens ein Abgasbehandlungselement (7) fixiert ist, der in einer Einschubrichtung (9) axial in das Gehäuse (2) einschiebbar ist und der einen axialen Anschlag (14), der im eingebauten Zustand am Gegenanschlag (16) des Gehäuses (2) axial anliegt, sowie eine Stützkontur (20) aufweist, an der im eingebauten Zustand das jeweilige Riegelelement (19) axial abgestützt ist.

## Claims

1. An exhaust gas treatment device for an exhaust system of an internal combustion engine,
- with a tubular housing (2),
- with an insert (5) arranged exchangeably in the housing (2), which insert has a tubular casing (6) and at least one exhaust gas treatment element (7) fixed in the casing (6),
- wherein the insert (5) is able to be inserted into the housing (2) in an insertion direction (9) which runs parallel to a longitudinal centre axis (10) of the housing (2),
- wherein the casing (6) has on a casing outer side (15) an axial stop (14), which lies axially against an axial counter-stop (16) in the insertion direction (9), which counter-stop is formed on the housing (2) on a housing inner side (17),
- wherein at least one bolt element (19) is provided on the housing inner side (17), which bolt element rests axially on a support contour (20), formed on the casing (6), in the insertion direction (9),
- wherein the respective bolt element (19) is a separate component with respect to the housing (2),
**characterized in that**
- a plurality of bolt elements (19) is provided, which are arranged distributed in the circumferential direction (21), and
- the respective bolt element (19) is fixed on the housing (2).

2. The device according to Claim 1,
**characterized in that**
the counter-stop (16) is arranged in the interior of the housing (2) spaced apart axially from axial ends of the housing (2).

3. The device according to Claim 2,
**characterized in that**
the bolt element (19) is arranged in the interior of the housing (2) spaced apart axially from axial ends of the housing (2).

4. The device according to one of Claims 1 to 3,
**characterized in that**
the respective bolt element (19) is configured in a radially spring-elastic manner, so that it is adjustable in an elastic manner between a locking position (VS) in which it cooperates with the support contour (20) for the axial fixing of the insert (5) in the housing (2), and an unlocking position (ES), in which it frees the support contour (20), so that the insert (5) is able to be drawn out from the housing (2) in an extraction direction (11) opposed to the insertion direction (9).

5. The device according to one of Claims 1 to 4,
**characterized in that**
the respective bolt element (19) is supported in a pre-stressed manner on the support contour (20), so that the stop (14) lies in an axially pre-stressed manner against the counter-stop (16).

6. The device according to one of Claims 1 to 5,
**characterized in that**
the respective bolt element (19) is configured in a ramp-shaped manner on a bolt side (26) cooperating with the support contour (20).

7. The device according to Claim 6,
**characterized in that**
the respective bolt element (19) is arranged in a radially spring-elastic manner relative to the housing inner side (17), and lies against the support contour (20) in a radially pre-stressed manner, so that the ramp-shaped bolt side (26) introduces an axial pre-stressing into the casing (6).

8. The device according to one of Claims 1 to 7,
**characterized in that**
the stop (14) is arranged on an axial end section (28) of the casing (6) leading ahead in the insertion direction (9).

9. The device according to one of Claims 1 to 8,
**characterized in that**
the stop (14) is formed by a casing step (29), circumferential in an annular manner in the circumferential direction (21), which connects an element receiving section (31), containing the at least one exhaust gas treatment element (7) with a casing collar (30), the outer cross-section (35) of which is smaller than the outer cross-section (36) of the element receiving section (31).

10. The device according to one of Claims 1 to 9,
**characterized in that**
the counter-stop (16) is formed by a housing step (32), circumferential in an annular manner in the circumferential direction (21), which connects an insert receiving section (34), containing the insert (5), with a housing collar (33), the inner cross-section (37) of which is smaller than the inner cross-section (38) of the insert receiving section (34).

11. The device according to Claims 9 and 10,
**characterized in that**
- the inner cross-section (37) of the housing collar (33) is greater than the outer cross-section (35) of the casing collar (30) and is smaller than the outer cross-section (36) of the element receiving section (31),
- the inner cross-section (38) of the insert receiving section (34) is greater than the outer cross-section (36) of the element receiving section (31).

12. The device according to one of Claims 1 to 11,
**characterized in that**
an annular gap (39) is formed radially between the housing inner side (17) and the casing outer side (15), in which annular gap at least one gap seal (40) is arranged.

13. The device according to one of Claims 1 to 12,
**characterized in that**
the support contour (20) is formed on an axial end face (41) of the casing (6), which faces away from the stop (14), contrary to the insertion direction (9).

14. The device according to one of Claims 1 to 13,
**characterized in that**
at least one support tab (42) is provided on the casing (6), which supports the casing (6) radially on the housing inner side (17).

15. The device according to one of Claims 1 to 14,
**characterized in that**
at least one extraction contour (45) is provided on the casing (6), on which contour an extraction tool can engage in a form-fitting manner, in order to withdraw the insert (5) out from the housing (2).

16. The device according to one of Claims 1 to 15,
**characterized in that**
the housing (2) can be opened and closed again in a region (46) spaced apart from the respective bolt element (19), contrary to the insertion direction (9), so that with an opened housing (2) the respective insert (5) is able to be extracted from the housing (2) and is able to be inserted therein.

17. An insert for installation into an exhaust gas treatment device (1) according to one of Claims 1 to 16,
**characterized by**
a casing (6), in which at least one exhaust case treatment element (7) is fixed, which casing is able to be inserted axially into the housing (2) in an insertion direction (9) and which has an axial stop (14), which in the installed state lies axially against the counter-stop (16) of the housing (2), and a support contour (20), against which the respective bolt element (19) is supported axially in the installed state.

## Revendications

1. Dispositif de traitement de gaz d'échappement pour une installation de gaz d'échappement d'un moteur à combustion interne,
- comprenant un boîtier (2) tubulaire,
- comprenant une pièce rapportée (5) agencée de manière échangeable dans le boîtier (2) et qui présente une chemise tubulaire (6) et au moins un élément de traitement de gaz d'échappement (7) fixé dans la chemise (6),
- dans lequel la pièce rapportée (5) peut être enfichée dans le boîtier (2) dans un sens d'enfichage (9) qui s'étend parallèlement à un axe central longitudinal (10) du boîtier (2),
- dans lequel la chemise (6) présente sur un côté externe (15) de la chemise une butée axiale (14) qui s'appuie axialement sur une contre-butée axiale (16) dans le sens d'enfichage (9), qui est formée sur le boîtier (2) sur un côté interne (17) du boîtier,
- dans lequel il est prévu sur le côté interne (17) du boîtier au moins un élément de verrouillage (19) qui s'appuie axialement sur un contour d'appui (20) formé sur la chemise (6) dans la direction d'enfichage (9),
- dans lequel l'élément de verrouillage (19) respectif est une pièce séparée par rapport au boîtier (2),
**caractérisé en ce que**,
- il est prévu plusieurs éléments de verrouillage (19) qui sont répartis dans la direction périphérique (21) et
- l'élément de verrouillage (19) respectif est fixé sur le boîtier (2).

2. Dispositif selon la revendication 1,
**caractérisé en ce que**,
la contre-butée (16) est agencée à l'intérieur du boîtier (2) à distance axiale d'extrémité axiales du boîtier (2).

3. Dispositif selon la revendication 2,
**caractérisé en ce que**,
l'élément de verrouillage (19) est agencé à l'intérieur du boîtier (2) à distance axiale d'extrémités axiales du boîtier (2).

4. Dispositif selon l'une quelconque des revendications 1 à 3,
**caractérisé en ce que**,
l'élément de verrouillage (19) respectif se présente sous une forme radialement élastique de sorte qu'il puisse être réglé de manière élastique entre une position de verrouillage (VS), dans laquelle il coopère avec le contour d'appui (20) pour fixer axialement la pièce rapportée (5) dans le boîtier (2), et une position de déverrouillage (ES), dans laquelle il libère le contour d'appui (20) de sorte que la pièce rapportée (5) puisse être retiré du boîtier (2) dans un sens d'extraction (11) opposé au sens d'enfichage (9).

5. Dispositif selon l'une quelconque des revendications 1 à 4,
**caractérisé en ce que**,
l'élément de verrouillage (19) respectif s'appuie sous précontrainte sur le contour d'appui (20) de sorte que la butée (14) s'applique axialement sous précontrainte sur la contre-butée (16).

6. Dispositif selon l'une quelconque des revendications 1 à 5,
**caractérisé en ce que**,
l'élément de verrouillage (19) respectif est conçu en forme de rampe sur un côté verrou (26) coopérant avec le contour d'appui (20).

7. Dispositif selon la revendication 6,
**caractérisé en ce que**,
l'élément de verrouillage (19) respectif est agencé radialement de manière élastique par rapport au côté interne (17) du boîtier et s'applique radialement sous précontrainte sur le contour d'appui (20) de sorte que le côté verrou en forme de rampe (26) induise une précontrainte axiale dans la chemise (6).

8. Dispositif selon l'une quelconque des revendications 1 à 7,
**caractérisé en ce que**,
la butée (14) est agencée sur une section d'extrémité axiale (28) de la chemise (6) antérieure dans le sens d'enfichage (9).

9. Dispositif selon l'une quelconque des revendications 1 à 8,
**caractérisé en ce que**,
la butée (14) est formée par un gradin (29) de la chemise tournant de manière annulaire dans la direction périphérique (21), lequel gradin relie une section réceptrice d'élément (31) contenant au moins un élément de traitement de gaz d'échappement (7) à une collerette de chemise (30), dont la section transversale externe (35) est plus petite que la section transversale externe (36) de la section réceptrice d'élément (31).

10. Dispositif selon l'une quelconque des revendications 1 à 9,
**caractérisé en ce que**,
la contre-butée (16) est formée par un gradin de boîtier (32) tournant de manière annulaire dans la direction périphérique (21), qui relie une section réceptrice de pièce rapportée (34) contenant la pièce rapportée (5) à une collerette de boîtier (33), dont la section transversale interne (37) est plus petite que la section transversale interne (38) de la section réceptrice de pièce rapportée (34).

11. Dispositif selon les revendications 9 et 10,
**caractérisé en ce que**,
- la section transversale interne (37) de la collerette de boîtier (33) est plus grande que la section transversale externe (35) de la collerette de chemise (30) et plus petite que la section transversale externe (36) de la section réceptrice d'élément (31),
- la section transversale interne (38) de la section réceptrice de pièce rapportée (34) est plus grande que la section transversale externe (36) de la section réception d'élément (31).

12. Dispositif selon l'une quelconque des revendications 1 à 11,
**caractérisé en ce que**,
entre le côté interne (17) du boîtier et le côté externe (15) de la chemise est formé radialement un espacement annulaire (39) dans lequel est agencé au moins un élément d'étanchéité (40) de l'espacement.

13. Dispositif selon l'une quelconque des revendications 1 à 12,
**caractérisé en ce que**,
le contour d'appui (20) est formé sur un côté frontal axial (41) de la chemise (6), qui est opposé au sens d'enfichage (9) de la butée (14).

14. Dispositif selon l'une quelconque des revendications 1 à 13,
**caractérisé en ce que**,
sur la chemise (6) est prévue au moins une éclisse d'appui (42) qui appuie radialement la chemise (6) sur le côté interne (17) du boîtier.

15. Dispositif selon l'une quelconque des revendications 1 à 14,
**caractérisé en ce que**,
sur la chemise (6) est prévu au moins un contour d'extraction (45) sur lequel peut s'engager un outil d'extraction avec adaptation de formes afin de retirer la pièce rapportée (5) du boîtier (2).

16. Dispositif selon l'une quelconque des revendications 1 à 15,
**caractérisé en ce que**,
le boîtier (2) peut être ouvert et refermé dans une zone (46) espacée de l'élément de verrouillage (19) respectif à l'encontre du sens d'enfichage (9) de sorte que, lorsque le boîtier (2) est ouvert, la pièce rapportée respective (5) puisse être retirée du boîtier (2) et enfichée dans celui-ci.

17. Pièce rapportée à incorporer à un dispositif de traitement de gaz d'échappement (1) selon l'une quelconque des revendications 1 à 16, **caractérisée par** une chemise (6), dans laquelle est fixé au moins un élément de traitement de gaz d'échappement (7), qui peut être enfiché axialement dans le boîtier (2) dans un sens d'enfichage (9) et qui présente une butée axiale (14), qui s'applique axialement à l'état incorporé sur la contre-butée (16) du boîtier (2), ainsi qu'un contour d'appui (20), sur lequel, à l'état incorporé, l'élément de verrouillage (19) respectif est appuyé axialement.
